Europäisches Patentamt

European Patent Office

Office européen des brevets

(11) Numéro de publication: **0 254 599 B1**

(12) FASCICULE DE BREVET EUROPEEN

(45) Date de publication de fascicule du brevet: **20.05.92**  (51) Int. Cl.⁵: **C08L 23/02**

(21) Numéro de dépôt: **87400679.4**

(22) Date de dépôt: **26.03.87**

Le dossier contient des informations techniques présentées postérieurement au dépôt de la demande et ne figurant pas dans le présent fascicule.

(54) Compositions polyolefiniques et articles industriels obtenus par leur transformation.

(30) Priorité: **28.03.86 FR 8604499**

(43) Date de publication de la demande:
**27.01.88 Bulletin 88/04**

(45) Mention de la délivrance du brevet:
**20.05.92 Bulletin 92/21**

(84) Etats contractants désignés:
**AT BE CH DE ES FR GB GR IT LI LU NL SE**

(56) Documents cités:
**EP-A- 0 102 857**
**EP-A- 0 144 642**
**GB-A- 1 199 669**

(73) Titulaire: **ECP-ENICHEM POLYMERES FRANCE S.A.**
**11 rue de l'Abreuvoir**
**F-92411 Courbevoie(FR)**

(72) Inventeur: **Crenna, Vincent**
**Résidence du Centre A.29 Rue A.Défossé**
**F-62160 Bully Les Mines(FR)**

**Description**

"Le document GB-A-1199669 décrit des compositions ternaires basées sur le polyéthylène haute densité, les additifs utilisés ayant pour but d'augmenter la rigidité et la résistance à chaud et d'améliorer les propriétés mécaniques du dit polyéthylène haute densité. Ces compositions comprennent de 50 à 95 % en poids de (A) un homopolymère d'éthylène ayant une densité d'au moins 0,94 g/ml et/ou un copolymère statistique d'éthylène et d'au plus 10 % en poids d'au moins une autre alpha-oléfine copolymérisée, de 2 à 40 % en poids de (B) un polypropylène cristallin hautement orienté ayant au moins 80 % en poids d'insolubles dans le n-heptane bouillant et/ou un copolymère statistique de propylène et d'au plus 10 % en poids d'au moins une autre alpha-oléfine copolymérisée, et de 3 à 40 % en poids de (C) un copolymère à blocs d'éthylène et de propylène et/ou un copolymère à blocs d'éthylène, de propylène et d'au moins une autre alpha-oléfine copolymérisée".

On connaît déjà par le brevet EP-B1-0.102.857 des compositions comprenant de 10 à 40 % en poids de polypropylène isotactique et de 60 à 90% en poids d'un copolymère d'éthylène et d' $\alpha$-oléfine comprenant au moins 4 atomes de carbone, de densité comprise entre 0,905 et 0,940 et d'indice de fluidité compris entre 0,2 et 3 dg/min. Ces compositions permettent la fabrication de fils mono-orientés de propriétés améliorées (en particulier la ténacité), utiles notamment dans l'industrie de l'emballage sous la forme de sacs tissés.

Contrairement à cet art antérieur, dont l'objectif est l'amélioration de la ténacité de fils mono-orientés, le problème que la présente invention cherche à résoudre consiste à améliorer de façon importante la résistance au choc, plus particulièrement à basse température, de compositions thermoplastiques à base de polypropylène isotactique et de copolymère éthylène/ $\alpha$-oléfine. Pour ce faire, la présente invention propose une solution différente consistant en une composition polyoléfinique comprenant comme premier constituant (A) au moins un polymère de propylène fortement isotactique et comme second constituant (B) au moins un copolymère linéaire, ayant une densité comprise entre 0,914 et 0,945, d'éthylène et d'au moins une $\alpha$-oléfine ayant de 3 à 12 atomes de carbone, caractérisée en ce que, pour 100 parties en poids, elle comprend de 30 à 40 parties en poids du polymère (A), de 40 à 67 parties en poids du polymère (B) et en outre de 3 à 25 parties en poids d'au moins un terpolymère (C), qui n'est pas un terpolymère à blocs, ayant une densité comprise entre 0,865 et 0,912, comprenant de 70 à 94 % en moles d'éthylène, de 4 à 20 % en moles de propylène et de 2 à 10 % en moles d'au moins une $\alpha$-oléfine ayant de 4 à 12 atomes de carbone.

Ainsi la présente invention est basée sur l'observation que le terpolymère (C), ayant une densité intermédiaire entre d'une part le copolymère thermoplastique (B) et d'autre part des copolymères caoutchoutiques, présente, en raison de son compromis entre phases cristallines et phases amorphes, une capacité particulière au renforcement de compositions de (A) et (B), même lorsqu'il est utilisé en de faibles proportions. Par ailleurs il convient de noter que l'addition de ce terpolymère à des compositions telles que celles du brevet EP-B1-0.102.857 est désavantageuse pour l'obtention de fils mono-orientés.

Par polymère (A) de propylène en tant que premier constituant (A) on entend un polymère comprenant au moins 80 % en moles de motifs dérivés du propylène et le cas échéant jusqu'à 20 % en moles de motifs dérivés de l'éthylène ou d'une $\alpha$-oléfine ayant de 4 à 12 atomes de carbone. Dans les définitions des polymères (B) et (C) il faut entendre que ceux-ci peuvent comprendre des motifs dérivés d'une ou plusieurs $\alpha$-oléfines dans des proportions en moles telles que soient satisfaites les conditions relatives aux densités desdits polymères. Les relations, en fonction de la nature de l' $\alpha$-oléfine comonomère, entre ces proportions en moles et la densité du copolymère résultant sont parfaitement connues de l'homme de l'art.

Selon les applications envisagées pour les compositions selon l'invention, les indices de fluidité standards des constituants (A), (B) et (C) pourront être choisis dans des gammes relativement vastes. Par exemple l'indice de fluidité standard (mesuré à 230°C sous 2,16 kg) du polymère (A) pourra être compris entre 0,4 et 60 dg/min environ, de préférence entre 1 et 20 dg/min. L'indice de fluidité standard (mesuré à 190°C sous 2,16 kg) du polymère (B) pourra être compris entre 0,3 et 100 dg/min environ, de préférence entre 0,8 et 60 dg/min. L'indice de fluidité standard (mesuré à 190°C sous 2,16 kg) du polymère (C) pourra être compris entre 0,8 et 20 dg/min.

Les compositions selon l'invention peuvent en outre comprendre des quantités usuelles d'antioxydants et/ou de stabilisants contre la rayonnement ultraviolet, ainsi que le cas échéant jusqu'à 100 parties en poids, pour 100 parties de la composition, de charges minérales telles que talc, mica, craie, billes de verre, hydroxydes d'aluminium, ou de charges organiques telles que la sciure de bois. Ces charges peuvent être incorporées par des moyens usuels tels qu'un mélangeur interne.

Un procédé de fabrication d'une composition telle que décrite précédemment consiste à mettre en présence les quantités appropriées des polymères (A), (B) et (C) et à les mélanger de façon à obtenir une composition homogène. Ceci peut être effectué notamment par la technique dite de mélange à sec, ou bien encore à l'état fondu dans une extrudeuse.

Un second objet de la présente invention consiste en des articles industriels obtenus par transformation d'une composition polyoléfinique telle que décrite précédemment, par exemple par l'une des techniques suivantes :

- extrusion-soufflage de films minces (épaisseur de 20 à 50 $\mu$m environ), par exemple de films pour emballage et/ou congélation.
- coextrusion-soufflage de films associant une couche réalisée à partir d'une composition selon l'invention et une couche de polypropylène.
- extrusion-soufflage de corps creux, par exemple de bouteilles.
- injection, notamment pour la réalisation d'articles habituellement en polypropylène mais dont la résistance au choc à froid était insuffisante.

Les exemples ci-après ont pour objet d'illustrer quelques modes de réalisation de la présente invention sans prétendre en limiter la portée.

EXEMPLES 1 à 4

On considère des compositions comprenant, pour 100 parties en poids:
- 30 parties en poids d'un homopolymère de propylène (A$_1$) de densité 0,900 et d'indice de fluidité standard (déterminé selon la norme ASTM D 1238-73) égal à 6 dg/min.,
- x parties en poids d'un copolymère éthylène-butène-1 (B$_1$) de densité 0,920 et d'indice de fluidité standard (déterminé selon la norme ASTM D 1238-73) égal à 20 dg/min., et
- y parties en poids d'un terpolymère éthylène-propylène-butène-1 (C$_1$) de densité 0,906 et d'indice de fluidité standard (déterminé selon la norme ASTM D 1238-73) égal à 1 dg/min., comprenant 91,6 % en moles d'éthylène, 5,2 % en moles de propylène et 3,2 % en moles de butène-1.

Ces compositions sont transformées par la technique d'injection en barreaux sur lesquels on mesure la résistance au choc RC à -40°C, déterminée selon la norme ASTM D 256-81 et exprimée en kJ/m$^2$.

Le tableau I ci-après rassemble les résultats de ces mesures en fonction de la proportion x du polymère (B) et de la proportion y du terpolymère (C). Comme on le comprendra aisément, l'exemple 1 est comparatif.

TABLEAU I

| Exemple | 1 | 2 | 3 | 4 |
|---------|---|---|---|---|
| x | 70 | 65 | 60 | 50 |
| y | 0 | 5 | 10 | 20 |
| RC | 7 | 11 | 14 | 22 |

**Revendications**

1. Composition polyoléfinique comprenant comme premier constituant (A) au moins un polymère de propylène fortement isotactique et comme second constituant (B) au moins un copolymère linéaire, ayant une densité comprise entre 0,914 et 0,945, d'éthylène et d'au moins une $\alpha$-oléfine ayant de 3 à 12 atomes de carbone, caractérisée en ce que, pour 100 parties en poids, elle comprend de 30 à 40 parties en poids du polymère (A), de 40 à 67 parties en poids du polymère (B) et en outre de 3 à 25 parties en poids d'au moins un terpolymère (C), qui n'est pas un terpolymère à blocs, ayant une densité comprise entre 0,865 et 0,912, comprenant de 70 à 94 % en moles d'éthylène, de 4 à 20 % en moles de propylène et de 2 à 10 % en moles d'au moins une $\alpha$-oléfine ayant de 4 à 12 atomes de carbone.

2. Composition selon la revendication 1, caractérisée en ce que l'indice de fluidité standard (mesuré à 230°C sous 2,16 kg) du constituant (A) est compris entre 0,4 et 60 dg/min..

**3.** Composition selon l'une des revendications 1 et 2, caractérisée en ce que l'indice de fluidité standard (mesuré à 190°C sous 2,16 kg) du constituant (B) est compris entre 0,3 et 100 dg/min..

**4.** Composition selon l'une des revendications 1 à 3, caractérisée en ce que l'indice de fluidité standard (mesuré à 190°C sous 2,16 kg) du constituant (C) est compris entre 0,8 et 20 dg/min..

**5.** Article industriel obtenu par transformation d'une composition selon la revendication 1.

**6.** Article industriel selon la revendication 5, caractérisé en ce qu'il est obtenu par transformation par injection.

**7.** Article industriel selon la revendication 5, caractérisé en ce qu'il est obtenu par transformation par extrusion-soufflage de corps creux.

**8.** Article industriel selon la revendication 5, caractérisé en ce qu'il est obtenu par transformation par extrusion-soufflage de film.

**Claims**

**1.** Polyolefin composition comprising as a first constituent (A) at least one highly isotactic propylene polymer and, as a second constituent (B), at least one linear copolymer, with a relative density of between 0.914 and 0.945, of ethylene and of at least one $\alpha$-olefin containing from 3 to 12 carbon atoms, which composition is characterized in that, per 100 parts by weight, it comprises from 30 to 40 parts by weight of polymer (A), from 40 to 67 parts by weight of polymer (B) and, in addition, from 3 to 25 parts by weight of at least one terpolymer (C), which is not a block-terpolymer, with a relative density of between 0.865 and 0.912 comprising from 70 to 94 mol % of ethylene, from 4 to 20 mol % of propylene and from 2 to 10 mol % of at least one $\alpha$-olefin containing from 4 to 12 carbon atoms.

**2.** Composition according to claim 1, characterized in that the standard melt index (measured at 230°C under 2.16 kg) of constituent (A) is between 0.4 and 60 dg/min.

**3.** Composition according to either of claims 1 and 2, characterized in that the standard melt index (measured at 190°C under 2.16 kg) of constituent (B) is between 0.3 and 100 dg/min.

**4.** Composition according to one of claims 1 to 3, characterized in that the standard melt index (measured at 190°C under 2.16 kg) of constituent (C) is between 0.8 ad 20 dg/min.

**5.** Industrial article produced by conversion of a composition according to claim 1.

**6.** Industrial article according to claim 5, characterized in that it is produced by conversion by injection moulding.

**7.** Industrial article according to claim 5, characterized in that it is produced by conversion by blow-extrusion of a hollow body.

**8.** Industrial article according to claim 5, characterized in that it is produced by conversion by blow-extrusion of film.

**Patentansprüche**

**1.** Polyolefinzusammensetzung enthaltend als ersten Bestandteil (A) mindestens ein stark isotaktisches Propylenpolymer und als zweiten Bestandteil (B) mindestens ein eine Dichte zwischen 0,914 und 0,945 aufweisendes lineares Copolymer von Ethylen und mindestens einem $\alpha$-Olefin mit 3 bis 12 Kohlenstoffatomen, dadurch gekennzeichnet, daß sie auf 100 Gewichtsteile 30 bis 40 Gewichtsteile an Polymer (A), 40 bis 67 Gewichtsteile an Polymer (B) und außerdem 3 bis 25 Gewichtsteile an mindestens einem Terpolymer (C) enthalt, das kein Blockterpolymer ist, eine Dichte zwischen 0,865 und 0,912 besitzt und 70 bis 94 Mol-% Ethylen, 4 bis 20 Mol-% Propylen und 2 bis 10 Mol-% mindestens eines $\alpha$-Olefins mit 4 bis 12 Kohlenstoffatomen enthält.

**2.** Zusammensetzung nach Anspruch 1, dadurch gekennzeichnet, daß der Standard-Fließindex (gemessen bei 230°C unter 2,16 kg) des Bestandteils (A) zwischen 0,4 und 60 dg/min beträgt.

**3.** Zusammensetzung nach Anspruch 1 oder 2, dadurch gekennzeichnet, daß der Standard-Fließindex (gemessen bei 190°C unter 2,16 kg) des Bestandteils (B) zwischen 0,3 und 100 dg/min beträgt.

**4.** Zusammensetzung nach einem der Ansprüche 1 bis 3, dadurch gekennzeichnet, daß der Standard-Fließindex (gemessen bei 190°C unter 2,16 kg) des Bestandteils (C) zwischen 0,8 und 20 dg/min beträgt.

**5.** Industrieartikel hergestellt durch Verarbeitung einer Zusammensetzung nach Anspruch 1.

**6.** Industrieartikel nach Anspruch 5, dadurch gekennzeichnet, daß er durch Verarbeitung durch Spritzgießen hergestellt ist.

**7.** Industrieartikel nach Anspruch 5, dadurch gekennzeichnet, daß er durch Verarbeitung durch Hohlkörper-Extrusionsblasen hergestellt ist.

**8.** Industrieartikel nach Anspruch 5, dadurch gekennzeichnet, daß er durch Verarbeitung durch Schlauchfolien-Extrusionsblasen hergestellt ist.